# EUROPEAN PATENT APPLICATION

(11) **EP 1 148 698 A2**
(43) Date of publication of application: **24.10.2001**
(21) Application number: 01108580.0
(22) Date of filing: 05.04.2001
(51) Int. Cl.: H04M 3/42, H04M 3/00, H04L 12/28

(54) **System and method for providing pre-subscribed internet access service**

(30) Priority: 21.04.2000 US 558752
(71) Applicant: Alcatel USA Sourcing, L.P., Plano, Texas 75075-5813 (US)
(72) Inventor: Babu, V. Mani, Plano, Texas 75025 (US); Gilman, R. Stevens, Rairview, Texas 75069 (US)
(74) Representative: Dreiss, Fuhlendorf, Steimle & Becker

(57) **Abstract**

An Internet access service provisioning system and method wherein Internet calls are identified by a particular call code. Internet access service providers (IASPs) are assigned separate identification codes that are preferably unique and uniform throughout a prescribed geographic region. Users are allowed to pre-subscribe to an IASP as their primary IASP in a pre-subscription agreement with their telephone companies (telcos) pursuant to access service agreements between the IASPs and the telcos. When a call is received in a local end office switch, a determination is made if it is an Internet call. Thereafter, if the calling party is a pre-subscriber, the service request is analyzed by the end office switch to connect the Internet call to an appropriate modem associated with the primary IASP. If no primary IASP is identified or if the user decides to override the primary IASP, the user can enter the identification code of a particular IASP that it wishes to use for Internet access. The end office switch analyzes the request and connects the user to the IASP identified in the call.

## Description

### BACKGROUND OF THE INVENTION

### Technical Field of the Invention

The present invention relates to providing access to a public packet-switched data internetwork such as the Internet and, more particularly, to a system and method for providing a pre-subscribed Internet access service via a single point of contact with users.

### Description of Related Art

Internet service providers (ISPs) and Internet access providers (IAPs) provide access to the Internet, and may range in size from commonly called "mom and pop operations" to national entities offering connectivity services nationwide or internationally in some instances. An increasing number of such national ISPs have begun to offer proprietary services and content in addition to simple Internet access. Examples of these ISPs include America Online (AOL), EarthLink/Mindspring, WorldNet, Prodigy, etc.

Due to the phenomenal growth in Internet-related services and transactions in recent years, hundreds of ISPs and IAPs competing for the residential and business market have come into existence. The cumulative effect has been that Internet access is quickly becoming as ubiquitous as making a regular phone call and, consequently, accessing the Internet is treated as just another type of telephone service. Moreover, Internet access is concomitantly viewed nowadays as being as important as access to a long distance telephone service.

Despite the impressive ascendancy of the Internet, conventional dial-up Internet access schemes are beset with several deficiencies and shortcomings. For example, even where a user has a subscription with an ISP, the user has to first dial one of many possible telephone numbers assigned to the ISP, which may be numerous and vary depending upon the geographic location. When the dialed number is busy, thereby temporarily impeding access to the Internet, the user may have to try dialing another number in the assigned group. Depending on the time of day, the user may have to try each and every one of the telephone numbers for several times before access is granted. Moreover, in some instances, even when the telephone lines assigned to the ISP are not busy, the user is required to search for an appropriate modem line that matches or otherwise is compatible with the modem employed by the user for accessing the Internet.

Further, when a user changes ISPs, the user needs to re-configure (or re-program) the user's browser (the dialer portion, in particular) to dial a different set of telephone numbers. This is also true if the same ISP changes the telephone numbers for various reasons. Typically, the users are not notified beforehand of the changed telephone numbers. Instead, they are directed to access the ISP via an 800 number first to download the changed numbers applicable for the local area where the user is located. This is similar to having to dial a specific access code for almost all long distance calls in spite of the fact that the user has selected a long distance carrier as its Primary Inter-exchange Carrier (PIC).

In addition, the current Internet access schemes do not provide for a mechanism whereby an Internet access call generated by a modem (associated with a suitable Internet appliance) is distinguished from an ordinary voice call. Accordingly, the local switch which receives the modem call via a local loop processes it like a voice call and connects it to the ISP using voice trunks in the case of a regional/national ISP having its Web site in a different Local Access and Transport Area (LATA). Those skilled in the art should recognize that it would be advantageous to be able to hand over the Internet access call to the ISP at the earliest point in the network so that voice-grade trunks are not established for Internet access purposes, thereby relieving them for voice traffic.

### SUMMARY OF THE INVENTION

Accordingly, the present invention is directed to an Internet access service provisioning system and method wherein Internet access service providers (IASPs) are assigned separate identification codes that are preferably unique and uniform throughout a prescribed geographic region. Also, in a presently preferred exemplary embodiment of the present invention, Internet calls are identified by a particular call code such that a telephone switch can distinguish between an Internet access call and regular voice traffic. IASPs establish service agreements with the local exchange carrier (LEC) network operators whereby users are allowed to pre-subscribe to an IASP as their primary IASP. When a call is received in a local end office switch, a determination is made if it is an Internet call. Thereafter, if the calling party is a pre-subscriber, the service request is analyzed by the end office switch to connect the Internet call to an appropriate modem associated with the primary IASP. If no primary IASP is identified or if the user wishes to override its primary IASP, the user may enter the identification code of a particular IASP that it wishes to use for Internet access. The end office switch analyzes the request and connects the user to the IASP identified in the call accordingly.

In another aspect, the present invention relates to an Internet access service provisioning method for accessing the Internet. The method first assigns an access call code to identify Internet calls for accessing the Internet. Individual identification codes are assigned to IASPs, wherein an identification code for a particular IASP is preferably unique and uniform throughout a predetermined geographic area. When a call is received in an end office switch disposed in a local exchange carrier network, dialed digits associated with the call are analyzed to determine if the call is an Internet call by detecting the Internet access code in the dialed digits. A determination is made in the end office switch if the Internet call is generated by a user having an access service pre-subscription with a first select IASP. If so, the Internet call is connected to an appropriate modem disposed in a modem bank that is associated with the first select IASP.

In a further embodiment of the present invention, the Internet access service provisioning method also includes the step of determining if the dialed digits include a particular identification code for a second select IASP, either to override the first select IASP or if the Internet call is generated by a user not having an access service pre-subscription. Responsive to the step of determining that the dialed digits include a particular identification code for a second select IASP, the Internet call is connected thereafter to the second select IASP's modem bank. In the presently preferred exemplary embodiment, the first select IASP comprises an IASP for which the user has a pre-subscription. On the other hand, the second select IASP may be individually specified by the user on a call-by-call basis.

### BRIEF DESCRIPTION OF THE DRAWINGS

A more complete understanding of the present invention may be had by reference to the following Detailed Description when taken in conjunction with the accompanying drawings wherein:
FIG. 1 depicts an exemplary communications network arrangement for facilitating pre-subscribed access to the Internet in accordance with the teachings of the present invention; and
FIG. 2 depicts a flow chart which illustrates the steps involved in an exemplary method of the present invention for facilitating pre-subscribed access to the Internet.

### DETAILED DESCRIPTION OF THE DRAWINGS

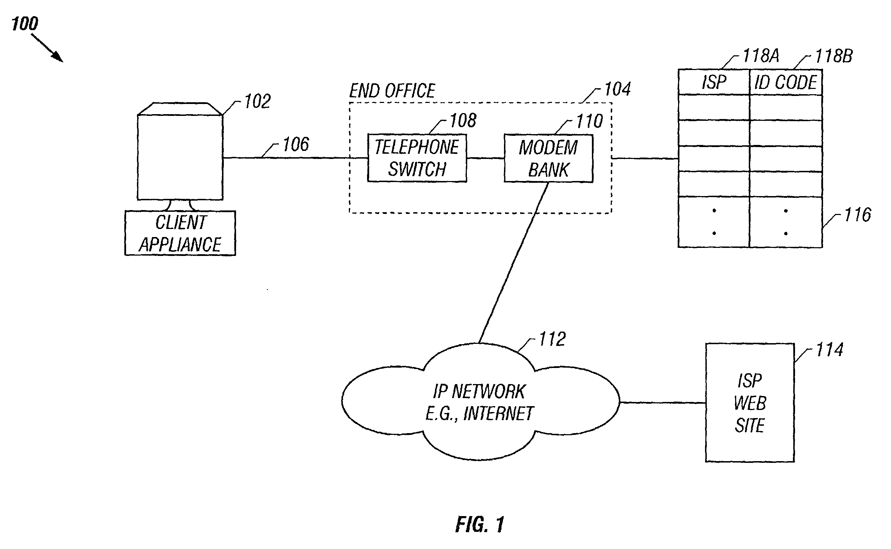

In the drawings, like or similar elements are designated with identical reference numerals throughout the several views thereof, and the various elements depicted are not necessarily drawn to scale. Referring now to FIG. 1, depicted therein is an exemplary communications network arrangement 100 for facilitating pre-subscribed access to the Internet in accordance with the teachings of the present invention. In a presently preferred exemplary embodiment of the present invention, various Internet access providers (IAPs) or Internet service providers (ISPs) (or, collectively Internet access service providers (IASPs) hereinafter) are assigned individual codes that are unique and uniform throughout a prescribed geographic area. For example, such IASP identification codes may be uniform throughout the United States. Also, the identification codes may be standardized by appropriate international bodies or organizations.

In addition, an Internet access call code -- preferably standardized over a predetermined geographic region -- is assigned in order to identify a call generated by an Internet appliance 102 (such as, for example, a device selected from the group consisting of personal computers, laptop or notebook computers, palmtop/hand-held computers, Internet-enabled mobile phones, personal digital assistants (PDAs), thin clients, et cetera) as a data or Internet call.

Service agreements may be established between the various IASPs and local exchange carrier (LEC) network operators whereby phone subscribers are allowed to specify by way of a pre-subscription a particular IASP as their primary or preferred IASP. Those skilled in the art should readily recognize that this arrangement is substantially akin to users choosing a Primary Inter-exchange Carrier (PIC) for long-distance telephone services wherein unique carrier identification codes (CICs) are assigned to various long-distance carriers.

As depicted in FIG. 1, the Internet appliance 102 is coupled via a suitable local loop 106 to an end office (EO) 104 disposed in a LEC network (not shown). A telephone switch 108 which forms at least a portion of the end office 104 is coupled to one or more modem banks, each of which may be associated with a particular corresponding IASP. For instance, a modem bank 110 is accordingly exemplified in FIG. 1.

A database 116 is available to the telephone switch 108 of the EO 104, wherein the database is populated with the IASP IDs 118A and their respective ID codes 118B. It should be apparent to those skilled in the art that the database 116 and the modem banks (e.g., modem bank 110) may be co-located with the EO 104 or may be external thereto. For example, additional subscriber information (user-specified criteria which include, for instance, time-of-day selection relating to primary or secondary IASPs, pre-subscription, etc.) may be provided together with the IASP codes and pre-subscriber information in a service node such as a Service Control Point (SCP) that can be accessed by the EO 104 using well known means for executing appropriate service logic. A packet-switched internetwork of data networks (e.g., the Internet 112) may be disposed between the modem bank 110 and the corporate Internet site (WWW site) 114 of a particular IASP.

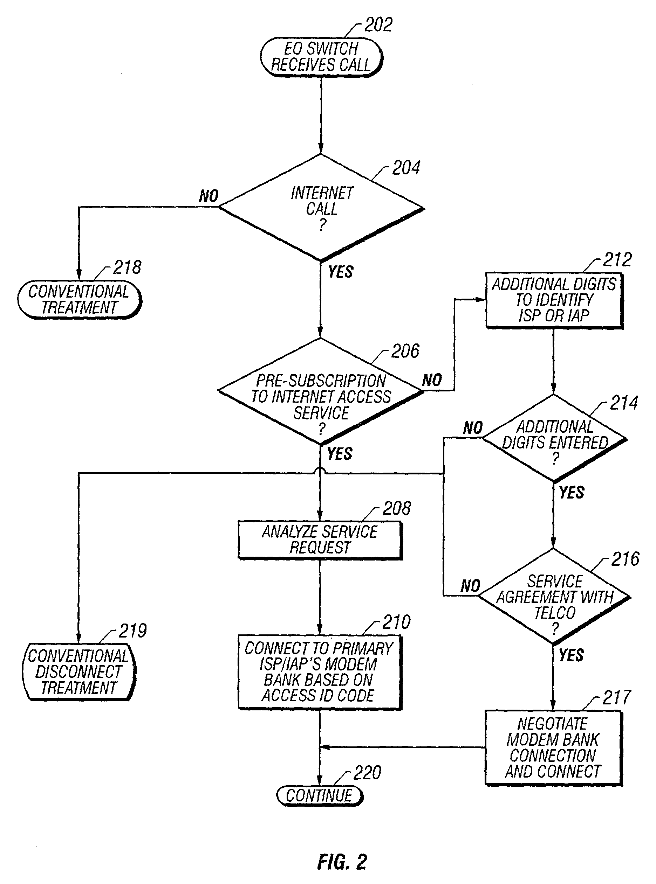

Referring now to FIG. 2, a flow chart is depicted therein which illustrates the steps involved in an exemplary method of the present invention for facilitating pre-subscribed access to the Internet. When the EO switch receives a call (step 202), a determination is made either locally or remotely by analyzing at least a portion of the dialed digits as to whether the call is an Internet call by detecting the predetermined Internet access code in the digits received in the EO switch (decision block 204). By way of example, the predetermined Internet access call code may comprise a plurality of digits or alphanumeric codes such as "999"; "*111"; et cetera, analogous to, e.g., the standardized code (i.e., "011") for identifying all out-going international calls from the US.

If the call is determined to be a non-Internet call, the EO switch will provide conventional treatment with respect to the call (step 218). On the other hand, if the call is an Internet call, a subsequent determination is made (locally in the EO switch or in an external service node) as to whether the user operating the Internet appliance has a pre-subscription to an IASP (i.e., user's primary IASP) that has a service agreement with the LEC network operator (decision block 206). If so, no additional digits are needed for effectuating the Internet access call. The EO switch thereafter analyzes the service request accordingly, for example, by querying the local or remote IASP ID database and/or a user pre-subscription database (which may also be referred to as an IASP service agreement database) that may specify multiple levels of services depending on connection bandwidth, Quality of Service (QoS)-dependent pricing schemes, et cetera (step 208). Subsequently, the Internet call is connected to a suitable modem disposed in the modem bank associated with the user's primary IASP (step 210). Thereafter, the Internet call may be routed via an appropriate gateway(s) to the IASP's web site and one or more Internet transaction sessions may subsequently ensue (step 220).

If the Internet call emanates from the appliance operated by a user who does not have a pre-subscription with a primary IASP or if the user wishes to override its primary IASP, additional digits are needed for further analysis. As exemplified in step 212, the user may be prompted to input an IASP ID code (as additional digits) that the user wishes to use for access. If no additional digits are entered or if the specified secondary IASP does not have a valid service agreement with the LEC network (as determined by decision blocks 214 and 216), a conventional call disconnect treatment (step 219) may be provided. If valid additional digits are available, the EO switch analyzes the service request accordingly and negotiates an appropriate modem connection for accessing the Internet (step 217). Thereafter, a suitable Internet session may follow (step 220).

Based on the foregoing, those skilled in the art should appreciate that the present invention's system and method for providing Internet access to users advantageously confers the following benefits. First, the present invention allows the telephone network to distinguish at an early stage a majority of the Internet traffic and route it separately from regular voice calls. Accordingly, voice trunks in the network may be relieved from establishing Internet access calls to the IASPs emanating from their users. Further, because the Internet traffic is separable, the telephone network may be provided with the capability in its billing system to bill such traffic at different rates or tariffs. Secondly, the subscribers do not have to remember the telephone numbers assigned to the IASPs, which may be numerous and vary depending on the geographic location of the user. Also, an IASP can route or re-route its traffic without requesting its customers to dial special numbers. In addition, it should be readily appreciated that pre-subscription makes it easy to subscribe to ISPs and IAPs because of the single point of contact/sale with the LEC operator. Furthermore, it is envisaged that the ease of Internet access afforded by the practice of the teachings of the present invention will lead to speedy integration of voice and data networks irrespective of the underlying technology (that is, circuit-switched telephony vs. packet-switched Internet).

It is believed that the operation and construction of the present invention will be apparent from the foregoing Detailed Description. While the system and method shown and described have been characterized as being preferred, it should be readily understood that various changes and modifications could be made therein without departing from the scope of the present invention as set forth in the following claims. For example, if a LEC network operator also provides Internet access services, an Internet access service agreement is not implicated in that case. Also, the EO switch may be provided with the capability to query an Intelligent Network (IN)-compliant service logic environment (e.g., the SCP node alluded to hereinabove) for additional or enhanced services which may relate to the Internet access service. For instance, the modem lines associated with an IASP may be treated as a hunt group or they may be intelligently matched with incoming modem calls based on modem compatibility, bandwidth resolution etc. Similarly, alternative IASP connections may be provided to users depending on overload and/or downtime conditions experienced by their primary IASPs.

Furthermore, while it should be clear that the benefits of the present invention may be fully realized when implemented on a national or international level, the teachings of the present invention may also be practiced in networks with regional and local IASPs that enter into service agreements with the LECs whereby users may pre-subscribe to their preferred IASPs in accordance herewith.

In addition, although the teachings of the present invention have been exemplified hereinabove with particular reference to what are traditionally termed ISPs and IAPs, it should be apparent that access to the Internet via hybrid entities such as Internet portals and content providers, which may also operate as access providers (e.g., Microsoft® Network or MSN), can be provisioned via the pre-subscription scheme of the present invention. Accordingly, those skilled in the art should readily appreciate that these and other variations, additions, modifications etc. are deemed to be within the ambit of the present invention whose scope is determined solely by the following claims.

## Claims

1. An Internet access service provisioning method for accessing the Internet, comprising the steps of:
assigning an access call code to identify Internet calls for accessing the Internet;
assigning individual identification codes to Internet access service providers, wherein an identification code for a particular Internet access service provider is uniform throughout a predetermined geographic area;
when a call is received in an end office switch disposed in a local exchange carrier network, analyzing at least a portion of dialed digits associated with said call to determine if said call is an Internet call by detecting said access call code;
determining if said Internet call is generated by a user having an access service pre-subscription with a first select Internet access service provider; and
if so, connecting said Internet call to an appropriate modem disposed in a modem bank that is associated with said first select Internet access service provider.

2. The Internet access service provisioning method as set forth in claim 1, wherein said modem bank is coupled to an Internet server operated by said first select Internet access service provider via a packet switched network.

3. The Internet access service provisioning method as set forth in claim 1, further comprising the steps of:
if said Internet call is generated by a user not having an access service pre-subscription, determining if said dialed digits include a particular identification code for a second select Internet access service provider; and
responsive to said step of determining that said dialed digits include a particular identification code for a second select Internet access service provider, connecting said Internet call to said second select Internet access service provider.

4. The Internet access service provisioning method as set forth in claim 1, wherein said predetermined geographic area comprises a particular country.

5. The Internet access service provisioning method as set forth in claim 1, wherein said modem bank is co-located with said end office switch.

6. The Internet access service provisioning method as set forth in claim 1, further comprising the steps of:
determining if said first select Internet access service provider is overloaded;
if so, querying said user for inputting a particular identification code for a second select Internet access service provider; and
responsive to said particular identification code provided by said user, connecting said Internet call to said second select Internet access service provider.

7. The Internet access service provisioning method as set forth in claim 1, wherein said step of determining if said Internet call is generated by a user having an access pre-subscription with a first select Internet access service provider is performed in a remotely located service node.

8. The Internet access service provisioning method as set forth in claim 1, further comprising the step of billing said Internet call at a different tariff by said end office switch.

9. A communications network for effectuating pre-subscribed access to the Internet wherein individual identification codes are assigned to Internet access service providers, comprising:
an end office switch disposed in a local exchange carrier network, said end office switch to receive calls from an Internet appliance via a local loop for accessing the Internet;
means in said end office switch to determine whether a call originated by a user operating said Internet appliance is an Internet access call based on an access call code received in said call;
means in said end office switch to determine if said user has an access service pre-subscription with a preferred Internet access service provider; and
means to connect said Internet access call to an appropriate modem disposed in a modem bank that is associated with said preferred Internet access service provider.

10. The communications network for effectuating pre-subscribed access to the Internet as set forth in claim 9, wherein said modem bank is co-located with said end office switch.

11. The communications network for effectuating pre-subscribed access to the Internet as set forth in claim 9, wherein said Internet appliance comprises a computer.

12. The communications network for effectuating pre-subscribed access to the Internet as set forth in claim 9, wherein said Internet appliance comprises a personal digital assistant (PDA) device.

13. The communications network for effectuating pre-subscribed access to the Internet as set forth in claim 9, wherein said Internet appliance comprises a palmtop computer.

14. The communications network for effectuating pre-subscribed access to the Internet as set forth in claim 9, wherein said Internet appliance comprises a mobile phone.

15. The communications network for effectuating pre-subscribed access to the Internet as set forth in claim 9, wherein said Internet appliance comprises a thin client.

16. The communications network for effectuating pre-subscribed access to the Internet as set forth in claim 9, wherein said Internet appliance comprises a hand-held computer.

17. The communications network for effectuating pre-subscribed access to the Internet as set forth in claim 9, further comprising means in said end office switch for connecting said Internet call to an alternative Internet access service provider when said user does not have a preferred Internet access service provider.

18. The communications network for effectuating pre-subscribed access to the Internet as set forth in claim 9, further comprising means in said end office switch for connecting said Internet call to an alternative Internet access service provider when said user specifies an identification code associated therewith.

19. The communications network for effectuating pre-subscribed access to the Internet as set forth in claim further comprising means in said end office switch for connecting said Internet call to an alternative Internet access service provider specified by said user when said preferred Internet access service provider overloaded.

20. The communications network for effectuating pre-subscribed access to the Internet as set forth in claim 9, further comprising means in said end office switch for connecting said Internet call to an alternative Internet access service provider based on a service agreement between said preferred Internet access service provider and said local exchange carrier network.

21. The communications network for effectuating pre-subscribed access to the Internet as set forth in claim 9, wherein said preferred Internet access service provider is a national provider.

22. The communications network for effectuating pre-subscribed access to the Internet as set forth in claim 9, wherein said access code for specifying Internet calls is standardized for a select country.

23. The communications network for effectuating pre-subscribed access to the Internet as set forth in claim 9, wherein said access code for specifying Internet calls is uniform throughout the world.
